# EUROPEAN PATENT APPLICATION

(11) **EP 2 591 986 A1**
(43) Date of publication of application: **15.05.2013**
(21) Application number: 11845976.7
(22) Date of filing: 01.08.2011
(51) Int. Cl.: B62D 25/06

(54) **ROOF STRUCTURE FOR VEHICLE**

(30) Priority: 03.12.2010 JP 2010270063
(71) Applicant: Toyota Shatai Kabushiki Kaisha, Kariya-shi, Aichi 448-0002 (JP)
(72) Inventor: MORI Katsuhiro, Kariya-shi Aichi 448-0002 (JP); KATO Akira, Kariya-shi Aichi 4480002 (JP)
(74) Representative: Chettle, Adrian John
(86) International application number: PCT/JP2011/067590
(87) International publication number: WO 2012/073554

(57) **Abstract**

It is an object of the present invention to increase adhesive performance between a roof panel and a roof reinforcement and to reduce costs of the roof reinforcement.

The present invention may provide a vehicle roof structure in which a roof panel (20) has a plurality of longitudinal beads (22) that are formed therein as press-formed lines extending in a vehicle-longitudinal direction and are juxtaposed in a vehicle-widthwise direction, in which the roof panel (229 is supported from below by a beam-shaped roof reinforcement (40) extending in the vehicle-widthwise direction, and in which the roof panel (20) and the roof reinforcement (40) are adhesively-bonded to each other, wherein the longitudinal beads (22) of the roof panel (20) are broken in a position in which the roof panel (20) overlaps the roof reinforcement (40), and wherein a bonding surface of the roof panel (20) to which the roof reinforcement (40) is bonded is flattened.

## Description

### TECHNICAL FIELD

The present invention relates to a vehicle roof structure in which a roof panel has a plurality of longitudinal beads that are formed therein as press-formed lines extending in a vehicle-longitudinal direction and are juxtaposed in a vehicle-widthwise direction, in which the roof panel is supported from below by beam-shaped roof reinforcements extending in the vehicle-widthwise direction, and in which the roof panel and the roof reinforcements are adhesively-bonded to each other.

### BACKGROUND ART

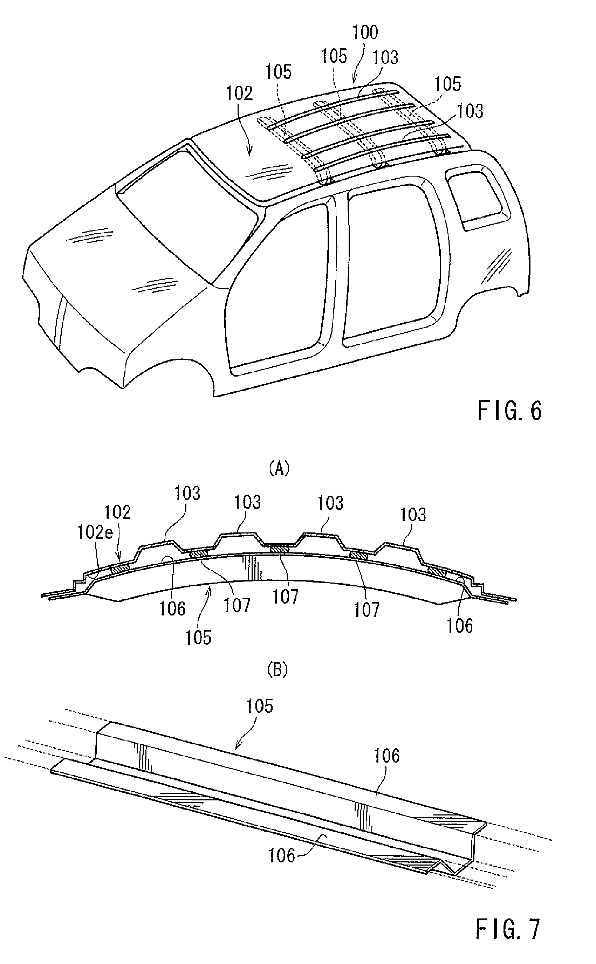

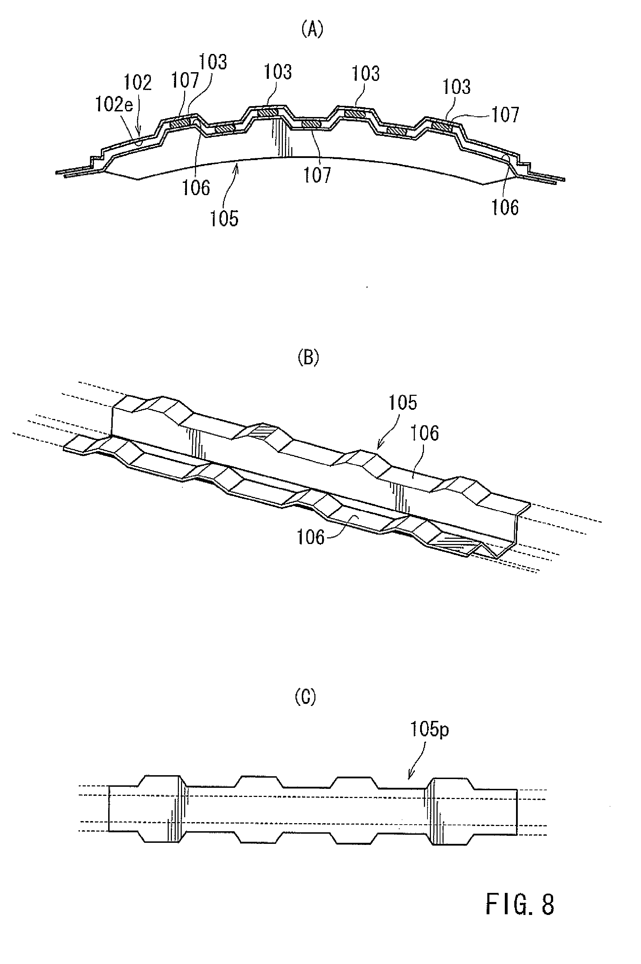

A vehicle of which the roof panel is provided with longitudinal beads is described in Patent Document 1. As shown in FIG. 6, in such a vehicle 100, a portion of the roof panel 102 having the longitudinal beads 103 formed therein is supported from below by roof reinforcements 105. Generally, as shown in FIG. 7(A), a rear surface 102e (a bonding surface 102e) of the roof panel 102 is adhesively-bonded to flat bonding surfaces 106 (FIG. 7(B)) of each of the roof reinforcements 105 by adhesives 107. Due to the plurality of longitudinal beads 103, the roof panel 102 has a concavo-convex corrugated plate shape. Therefore, the rear surface 102e (the bonding surface 102e) of the roof panel 102 may have a concavo-convex-shaped surface. Thus, the roof panel 102 can be adhesively-bonded to the bonding surfaces 106 of each of the roof reinforcements 105 via only downwardly projected portions of the concavo-convex-shaped surface. This may lead to less adhesive performance between the roof panel 102 and the roof reinforcements 105.
In order to improve on this point, as shown in FIGS. 8(A) and 8(B), each of the roof reinforcements 105 can be shaped such that each of the bonding surfaces 106 thereof can have a concavo-convex shape corresponding to the shape of the bonding surface 102e of the roof panel 102. According to this improvement, the bonding surface 102e of the roof panel 102 can be adhesively-bonded to the bonding surfaces 106 of each of the roof reinforcements 105 by the adhesives 107 via flattened portions thereof (all portions other than stepped transition portions). As a result, the adhesive performance can be increased.

### PRIOR ART DOCUMENT

### PATENT DOCUMENT

Patent Document 1: Japanese Laid-Open Patent Publication No. 2001-294174

### SUMMARY OF THE INVENTION

### PROBLEMS TO BE SOLVED BY THE INVENTION

In the vehicle roof structure described above, it is necessary to shape each of the roof reinforcements 105 such that each the bonding surfaces 106 thereof can have the concavo-convex shape corresponding to the shape of the bonding surface 102e of the roof panel 102. Therefore, as shown in FIG. 8(B), each of the roof reinforcements 105 may have a complicated shape. Further, when each of the roof reinforcements 105 is formed by press molding, materials required for forming the convexed shape in each of the bonding surfaces 106 may be greater than that required for forming the concave shape therein. Therefore, as shown in FIG. 8(C), a blank 105p to be pressed must be formed such that each of end peripheries thereof may have a concavo-convex shape. As a result, many waste pieces may be produced in order to form the blank. This may lead to a reduced yield rate.
Further, the bonding surface 102e of the roof panel 102 can be partially adhesively-bonded to the bonding surfaces 106 of each of the roof reinforcements 105 by the adhesives 107 via the only flattened portions thereof. Therefore, the adhesive performance is still insufficient compared with a case in which the bonding surface 102e and the bonding surfaces 106 are entirely adhesively-bonded to each other.

The present invention has been made in order to solve the problems described above. It is an object of the present invention to increase adhesive performance between a roof panel and a roof reinforcement and to reduce costs of the roof reinforcement.

### MEANS FOR SOLVING THE PROBLEMS

The above object can be attained by the invention as described in each of the claims.
An invention defined in claim 1 may provide a vehicle roof structure in which a roof panel has a plurality of longitudinal beads that are formed therein as press-formed lines extending in a vehicle-longitudinal direction and are juxtaposed in a vehicle-widthwise direction, in which the roof panel is supported from below by a beam-shaped roof reinforcement extending in the vehicle-widthwise direction, and in which the roof panel and the roof reinforcement are adhesively-bonded to each other, wherein the longitudinal beads of the roof panel are broken in a position in which the roof panel overlaps the roof reinforcement, and wherein a bonding surface of the roof panel to which the roof reinforcement is bonded is flattened.

According to the present invention, the longitudinal beads of the roof panel are broken in the position in which the roof panel overlaps the roof reinforcement, and the bonding surface of the roof panel is flattened. Therefore, a bonding surface of the roof reinforcement can be flattened so as to correspond to the bonding surface of the roof panel. Thus, when an adhesive is sandwiched between the bonding surfaces of the roof panel and the roof reinforcement, the adhesive can entirely conform to the bonding surfaces. As a result, adhesive performance between the bonding surface of the roof panel and the bonding surface of the roof reinforcement can be increased.
Further, because the bonding surface of the roof reinforcement can be flattened, the roof reinforcement can be simplified in shape compared with the conventional structure in which each of the bonding surfaces is shaped so as to have the concavo-convex shape. Therefore, the roof reinforcement can be easily manufactured. In addition, the roof reinforcement may have an increased yield rate. As a result, costs of the roof reinforcement can be reduced.

In an invention defined in claim 2, the bonding surface and a lateral bead extending along of the bonding surface in the vehicle-widthwise direction are formed in the roof panel at a portion in which the longitudinal beads are broken.
According to this, a reduction in strength of the roof panel caused by breaks in the longitudinal beads can be compensated by the lateral bead.

In an invention defined in claim 3, the roof reinforcement is formed as a channel-like member having a substantially U-shape and has flange-shaped bonding surfaces positioned along both peripheral portions of a channel opening portion, wherein the roof panel has a pair of bonding surfaces that extends in the vehicle-widthwise direction so as to correspond to the bonding surfaces of the roof reinforcement, and wherein the lateral bead of the roof panel is positioned between the pair of bonding surfaces formed in the roof panel.
Thus, because the roof reinforcement is formed as the channel-like member having the substantially U-shape and has the flange-shaped bonding surfaces positioned along the both peripheral portions of the channel opening portion, the lateral bead can be easily formed in the roof panel.

### EFFECTS OF THE INVENTION

According to the present invention, adhesive performance between a roof panel and a roof reinforcement can be increased. Further, costs of the roof reinforcement can be reduced.

### BRIEF DESCRIPTION OF THE DRAWINGS

FIG. 1 is a perspective view of a vehicle body having a roof structure according to Embodiment 1 of the present invention.
FIG. 2 is an enlarged view of an encircled portion II shown in FIG. 1.
FIG. 3 is a sectional view taken along line III-III of FIG. 2.
FIG. 4 is a sectional view taken along line IV-IV of FIG. 2.
FIG. 5 is a sectional view taken along line V-V of FIG. 4.
FIG. 6 is a perspective view of a vehicle body having a conventional roof structure.
FIG. 7 is a set of views which includes a vertically sectional view which illustrates the conventional roof structure (FIG. 7(A)), and a perspective view of one of roof reinforcements (FIG. 7(B)).
FIG. 8 is a set of views which includes a vertically sectional view which illustrates another conventional roof structure (FIG. 8(A)), a perspective view of one of roof reinforcements (FIG. 8(B)), and a development view of a blank of one of the roof reinforcements (FIG. 8(C)).

### MODE FOR CARRYING OUT THE INVENTION

### [Embodiment 1]

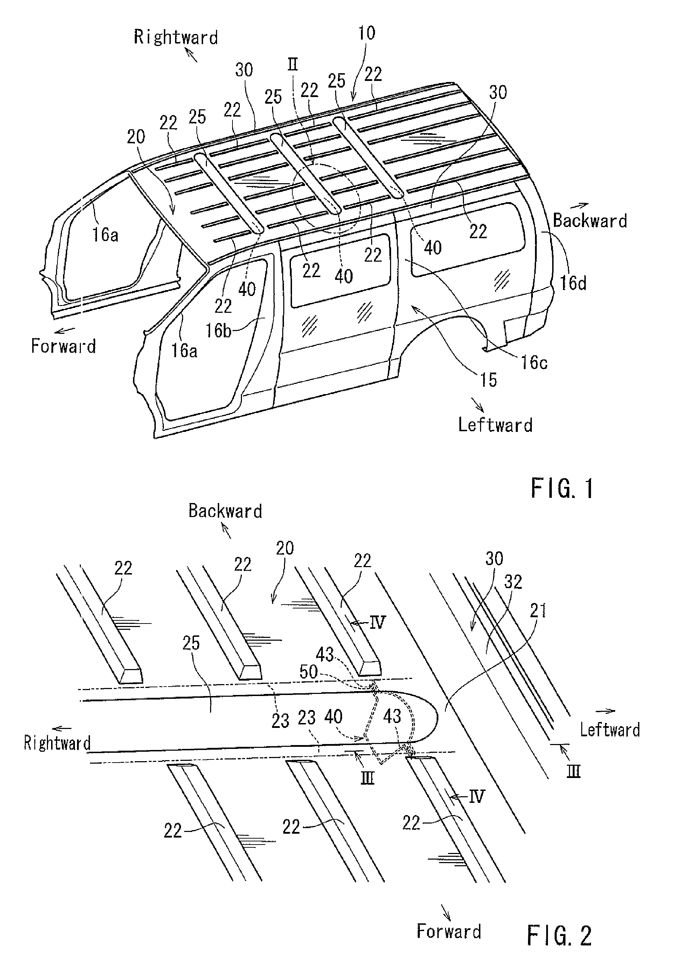

In the following, a vehicle roof structure according to Embodiment 1 of the present invention will be described with reference to FIG. 1 to FIG. 5.
Further, forward and backward, rightward and leftward, and upward and downward in the drawings respectively correspond to forward and backward, rightward and leftward, and upward and downward of a vehicle having the roof structure according to the present embodiment.

### <Regarding Outline of Roof Structure>

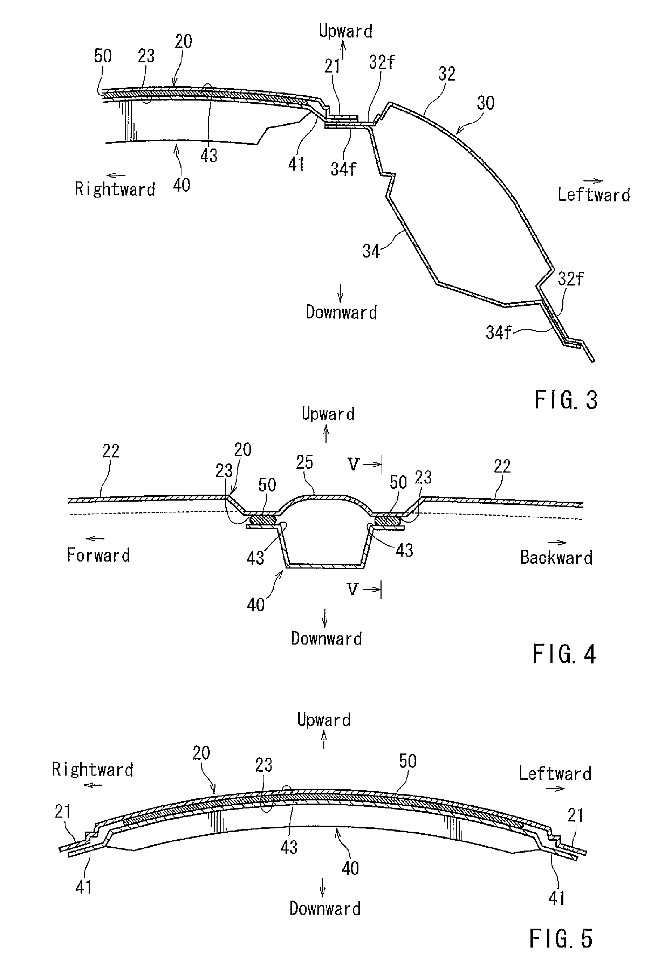

The roof structure according to the present embodiment is directed to a roof structure of a minivan 10.
As shown in FIG. 1, a roof portion of the minivan 10 is composed of a longitudinally elongated rectangular roof panel 20, cross-sectionally closed hollow roof side rails 30 that are positioned on and longitudinally extended along right and left sides of the roof panel 20, and a plurality of beam-shaped roof reinforcements 40 that are bridged between the roof side rails 30 so as to support the roof panel 20 from below, which will be shown in FIG. 3 or other drawings. Further, as shown in FIG. 1, the roof side rails 30 are respectively supported by pillars 16a, 16b, 16c and 16d that are positioned on right and left sides in front, rear and central portions of a body 15.
As shown in FIG. 3, each of the roof side rails 30 is composed of an outer panel 32 and an inner panel 34. The outer panel 32 and the inner panel 34 respectively have flange portions 32f and 34f that are respectively formed in widthwise both sides. The flange portions 32f and 34f of the outer panel 32 and the inner panel 34 are bonded to each other such that each of the roof side rails 30 can have a cross-sectionally closed hollow shape. Further, in FIG. 3, only the right roof side rail 30 is shown. However, the left roof side rail 30 may have the same structure as the right roof side rail 30. The right and left roof side rails 30 are formed symmetrically.

### <Regarding Roof Panel 20>

As shown in FIG. 3 and a transverse cross-sectional view of FIG. 5, the roof panel 20 may be gently curved upwardly so as to have the most heightened point at a central portion in a vehicle-widthwise direction. The roof panel 20 has flange portions 21 that are respectively formed in end peripheries positioned both sides (right and left sides) thereof in the vehicle-widthwise direction. As shown in FIG. 3, each of the flange portions 21 of the roof panel 20 is connected to the flange portions 32f and 34f of each of the roof side rails 30 with or without interleaving each of support plate portions 41 of the roof reinforcements 40 by welding or other such methods.
The roof panel 20 may be a product formed by press forming. As shown in FIGS. 1 and 2, the roof panel 20 may have a plurality of (six in FIG. 1) longitudinal beads 22 that are formed in a panel surface thereof. The longitudinal beads 22 are formed as press-formed lines extending in a vehicle-longitudinal direction and are juxtaposed in the vehicle-widthwise direction. As shown in FIG. 2, the longitudinal beads 22 may be configured so as to be projected from an outer surface of the roof panel 20. Further, each of the longitudinal beads 22 may be configured such that intermediate portions thereof can be broken at positions in which the roof panel 20 overlaps the roof reinforcements 40 in plan. That is, each of the longitudinal beads 22 may not exist in portions (overlapped portions) of the roof panel 20 overlapping the roof reinforcements 40 and may exist in portions other than the overlapped portions.
Further, the roof panel 20 may have lateral beads 25 that are formed in the overlapped portions thereof. The lateral beads 25 may be formed in a longitudinally central portion of the roof panel 20 so as to extend in the vehicle-widthwise direction. Further, as shown in FIG. 4, the roof panel 20 may have plural pairs of bonding surfaces 23 to which flange portions 43 (bonding surfaces) of the roof reinforcements 40 are bonded. Each pair of bonding surfaces 23 may be formed in an inner surface of each of the overlapped portions of the roof panel 20 so as to respectively be positioned along front and rear peripheries of each of the lateral beads 25.
Further, in order to manufacture the roof panel 20, for example, a steel sheet having a thickness of about 0.7 mm can be used.

As shown in FIGS. 2 and 4, each of the roof reinforcements 40 may be formed as a channel-like member having a substantially U-shape in transverse cross section. Each of the roof reinforcements 40 may be bent substantially horizontally along both peripheral portions of a channel opening portion, thereby forming the flange portions 43 therein. Upper surfaces of the flange portions 43 may function as the bonding surfaces that can be bonded to the bonding surfaces 23 of the roof panel 20. Each of the upper surfaces of the flange portions 43 may be flattened so as to correspond to a shape of each of the bonding surfaces 23 of the roof panel 20. The flange portions 43 of each of the roof reinforcements 40 may be hereinafter referred to as the bonding surfaces 43.
Further, as shown in FIG. 3, each of the roof reinforcements 40 may have the support plate portions 41 that are formed in longitudinal both ends thereof. Each of the support plate portions 41 can be connected to the flange portions 32f and 34f each of the roof side rails 30 with each of the flange portions 21 of the roof panel 20.
Further, in order to manufacture each of the roof reinforcements 40, for example, a steel sheet having a thickness of about 0.9 mm can be used.
Further, as shown in FIGS. 4 and 5, the bonding surfaces 43 of the roof reinforcements 40 and the bonding surfaces 23 of the roof panel 20 can be bonded to each other by adhesives 50 consisting primarily of synthetic rubber.

### <Regarding Assembling of Roof Portion>

First, the adhesives 50 may be applied to the both (front and rear) bonding surfaces 43 of each of the roof reinforcements 40. The front and rear bonding surfaces 43 of each of the roof reinforcements 40 may then be mated with the front and rear bonding surfaces 23 of the roof panel 20 in each of the overlapped portions. Thereafter, as shown in FIG. 5, each of the roof reinforcements 40 may be positioned such that the support plate portions 41 positioned in the longitudinal both ends thereof can be aligned with the right and left flange portions 21 of the roof panel 20. Each of the roof reinforcements 40 may then be pressed toward the roof panel 20. As previously described, the bonding surfaces 43 of each of the roof reinforcements 40 and the bonding surfaces 23 of the roof panel 20 are flattened. Therefore, the adhesives 50 sandwiched between the bonding surfaces 23 and 43 may entirely conform to the bonding surfaces 23 and 43.
Thus, all of the roof reinforcements 40 may be bonded to predetermined positions on the roof panel 20. Subsequently, as shown in FIG. 3, each of the flange portions 21 of the roof panel 20 may be connected to the flange portions 32f and 34f of each of the roof side rails 30 with or without each of support plate portions 41 of the roof reinforcements 40 by welding or other such methods.

### <Advantage of Roof Structure of Present Embodiment>

According to the roof structure of the present embodiment, the longitudinal beads 22 of the roof panel 20 are broken in the portions of the roof panel 20 overlapping the roof reinforcements 40, and the bonding surfaces 23 of the roof panel 20 are flattened. Therefore, the bonding surfaces 43 of each of the roof reinforcements 40 can be flattened so as to correspond to the bonding surfaces 23 of the roof panel 20 (FIGS. 4 and 5). Thus, when the adhesives 50 are sandwiched between the bonding surfaces 23 and 43 of the roof panel 20 and each of the roof reinforcements 40, the adhesives 50 can entirely conform to the bonding surfaces 23 and 43. As a result, adhesive performance between the bonding surfaces 23 of the roof panel 20 and the bonding surfaces 43 of each of the roof reinforcements 40 can be increased.
Further, because the bonding surfaces 43 of each of the roof reinforcements 40 can be flattened, each of the roof reinforcements 40 can be simplified in shape compared with the conventional structure in which each of the bonding surfaces is shaped so as to have the concavo-convex shape. Therefore, the roof reinforcements 40 can be easily manufactured. In addition, the roof reinforcements 40 may have an increased yield rate. As a result, costs of the roof reinforcements can be reduced.

Further, the roof panel 20 has the plural pairs of bonding surfaces 23 and the lateral beads 25 that are formed in the portions in which the longitudinal beads 22 are broken. Each of the lateral beads 25 extends along each pair of bonding surfaces 23 in the vehicle-widthwise direction. Therefore, a reduction in strength of the roof panel 20 caused by breaks in the longitudinal beads 22 can be compensated by the lateral beads 25.
Further, each of the roof reinforcements 40 may be formed as the channel-like member having the substantially U-shape and may have the flange-shaped bonding surfaces 43 positioned along the both peripheral portions of the channel opening portion. The lateral beads 25 can be easily formed in the roof panel 20.
In addition, the lateral beads 25 may function to effectively lead rainwater toward the right and left sides of the roof panel 20.

### <Modified Forms>

The present invention is not limited to the embodiment described above and can be changed or modified without departing from the scope of the present invention. In the present embodiment, each of the roof reinforcements 40 is formed as the channel-like member having the substantially U-shape in cross section and has the flange-shaped bonding surfaces 43 positioned along the both peripheral portions of the channel opening portion. Conversely, the roof panel 20 has the lateral beads 25 that are formed so as to respectively be aligned with the roof reinforcements 40 having the substantially U-shape in cross section. However, each of the roof reinforcements 40 can be formed as a rectangular tube-shaped member such that an upper surface thereof can function as the boding surfaces 43. In this case, the lateral beads 25 can be formed in the roof panel 20 so as to extend along the roof reinforcements 40. Further, the number of the roof reinforcements 40 can be changed as necessary.

### DESCRIPTION OF SYMBOLS

- 20: roof panel
- 22: longitudinal bead
- 23: bonding surface
- 25: lateral bead
- 40: roof reinforcement
- 43: bonding surface
- 50: adhesive

## Claims

1. A vehicle roof structure in which a roof panel has a plurality of longitudinal beads that are formed therein as press-formed lines extending in a vehicle-longitudinal direction and are juxtaposed in a vehicle-widthwise direction, in which the roof panel is supported from below by a beam-shaped roof reinforcement extending in the vehicle-widthwise direction, and in which the roof panel and the roof reinforcement are adhesively-bonded to each other,
wherein the longitudinal beads of the roof panel are broken in a position in which the roof panel overlaps the roof reinforcement, and wherein a bonding surface of the roof panel to which the roof reinforcement is bonded is flattened.

2. The vehicle roof structure as defined in claim 1, wherein the bonding surface and a lateral bead extending along of the bonding surface in the vehicle-widthwise direction are formed in the roof panel at a portion in which the longitudinal beads are broken.

3. The vehicle roof structure as defined in claim 2, wherein the roof reinforcement is formed as a channel-like member having a substantially U-shape and has flange-shaped bonding surfaces positioned along both peripheral portions of a channel opening portion,
wherein the roof panel has a pair of bonding surfaces that extends in the vehicle-widthwise direction so as to correspond to the bonding surfaces of the roof reinforcement, and
wherein the lateral bead of the roof panel is positioned between the pair of bonding surfaces formed in the roof panel.
